Europäisches Patentamt

(19)　European Patent Office

Office européen des brevets

(11)　**EP 1 026 192 A1**

(12)　**EUROPEAN PATENT APPLICATION**

(43)　Date of publication:
　　　**09.08.2000　Bulletin 2000/32**

(51)　Int Cl.7: **C08J 3/24**, C08L 101/14,
　　　　　F03G 7/06

(21)　Application number: **99200250.1**

(22)　Date of filing: **01.02.1999**

(84)　Designated Contracting States:
　　　**AT BE CH CY DE DK ES FI FR GB GR IE IT LI LU
　　　MC NL PT SE**
　　　Designated Extension States:
　　　**AL LT LV MK RO SI**

(71)　Applicant: **FORSKNINGSCENTER RISO
　　　4000 Roskilde (DK)**

(72)　Inventors:
　　　• **Smela, Elisabeth
　　　　2500 Valby (DK)**

• **Sommer-Larsen, Peter
　　2630 Taastrup (DK)**
• **Johansen, Ib
　　3500 Vaerlose (DK)**

(74)　Representative: **Hoeiberg, Susanne et al
　　　Hoeiberg ApS
　　　Noerre Farimagsgade 37
　　　1364 Copenhagen K (DK)**

(54)　**Novel composite capable of rapid volume change**

(57)　　The present invention relates to a novel composite capable of rapid volume change, the use of said composite as well as an actuator comprising the composite.

　　Thus, the invention relates to a composite comprising one conjugated polymer capable of changing redox-potential upon the onset of an electrical or chemical stimulus, and an ion-sensitive gel capable of changing volume, the polymer and the gel being morphologically interrelated, and wherein the volume change of the gel is in response to the change of the redox-potential of the conjugated polymer, and 50 % of the total volume change of the composite is achieved within a period of at most 5 minutes from the onset of the stimulus to the conjugated polymer.

　　The composite is capable of rapid volume change, may for example be used in an actuator in which the composite is controllable by electrical and/or chemical stimuli, and the strength of the composite is important.

　　Further the invention relates to the use of a composite for the production of an actuator and an actuator comprising a composite as well as a process of causing a volume change in a composite comprising a conjugated polymer capable of changing redox-potential and an ion-sensitive gel capable of changing volume.

**Description**

The present invention relates to a novel composite capable of rapid volume change, the use of said composite as well as an actuator comprising the composite.

**Background of the invention**

The development of polymer actuators for orthotics, prosthetics and advanced robotics has been a subject of much research.

For example, Okuzaki H. and Kunugi T. ("Rapid Communication - Electrically induced Contraction of Polypyrrole Film in Ambient Air" Journal of Polymer Science: Part B: Polymer Physics, Vol. 36, pp. 1591-1594 (1998)) found that a polypyrrole solid film contracts by applying a DC voltage in ambient air. The degree of contraction attained 1,5 % by applying 3 V.

A higher degree of contraction has been shown in for example Sawai T. ("Electrical control of the volume of pH-sensitive micro-gels", J. Electroanal. Chem., Vol. 297 (1991), pp. 399-407), where it was demonstrated that the volume of a pH-sensitive gel was electrically controlled in a pH modulator cell composed of a polypyrrole-coated platinum mesh electrode. The pH-sensitive gel was dispersed in an aqueous solution. The gel volume was reversibly modulated by approx. 30 % in response to the electrically controlled pH of the solution. A time lag was observed supposedly due to the slow diffusion of the ions in the solution. However, this laboratory setup was not useful as an actuator because of the gel being dispersed in the aqueous solution.

Others have conducted tests wherein an interpenetrating network of a polymer and a gel has been made. An example is Mansouri J. et al ("Assembly of conducting polymer networks inside hydrogel structures", SPIE Vol. 2716 (1996), pp. 8-19) describing the assembly of a hydrogel structure wherein a conducting polymer has been grown (polymerised) in the pores of the hydrogel creating a network of the two components.

Another example is Chiarelli P. et al ("A polymer composite showing electrocontractile response", Polymer Gels (1991), pp. 195-205, ed. by D. De Rossi et al, Plenum Press, New York). An interpenetrating network of a polyelectrolyte gel and a π-conjugated electron conducting polymer was constructed by thermal cross-linking of a polyacrylic acid-polyvinyl alcohol mixture followed by gas state polymerisation of polypyrrole using FeCl to polymerise the polypyrrole. The length variations of the composite was measured for various applied potential differences. In general the length variations are of 4 to 7 %, and are very slow, in that the changes appear within a period of 30 minutes up to several hours.

**Summary of the invention**

The object of the present invention is to provide a composite capable of rapid volume change, for example for use in an actuator in which the composite is controllable by electrical and/or chemical stimuli. Furthermore, the strength of the composite is important.

Accordingly, the present invention relates to a composite comprising one conjugated polymer capable of changing redox-potential upon the onset of an electrical or chemical stimulus, and an ion-sensitive gel capable of changing volume, the polymer and the gel being morphologically interrelated, and wherein the volume change of the gel is in response to the change of the redox-potential of the conjugated polymer, and 50 % of the total volume change of the composite is achieved within a period of at most 5 minutes from the onset of the stimulus to the conjugated polymer.

The composite of the present invention has several advantages over composites previously described in the prior art. Firstly it changes volume with greater speed.

The nature of the composite enables a greater volume change because it is the gel rather than the conjugated polymer determining the volume change.

Other advantages of the present composite is an improved strength determined by the conjugated polymer. Further the oxidation state of the conjugated polymer can be electrochemically controlled and thus the response of the composite depends on the applied voltage.

The composite described in the present invention is highly flexible and may therefore accommodate large volume changes without mechanical failure. This is due to the polymeric nature of the electrode used to drive the pH change.

Another aspect of the present invention concerns the use of a composite for the production of an actuator.

Further the present invention relates to an actuator comprising a composite as defined by the invention.

In another aspect the present invention relates to a sensor comprising a composite as defined below.

In yet another aspect of the present invention the actuator is an artificial muscle or an hydraulic actuator or a bilayer actuator or a micro actuator.

The present invention also relates to a process of causing a volume change in a composite comprising a conjugated polymer capable of changing redox-potential and an ion-sensitive gel capable of changing volume comprising the steps of:

-    applying an electrical or chemical stimulus to the conjugated polymer, causing a change of the redox-potential of the polymer,

-    arranging the ion-sensitive gel in contact with the conjugated polymer in a predetermined pattern of morphological interrelationship in order to allow the gel to respond to the change in redox-potential of the polymer by a change in volume.

Additionally the present invention concerns a method of producing a composite as defined below, comprising the steps of:

-    selecting a conjugated polymer and an ion-sensitive gel

-    combining the conjugated polymer and the ion-sensitive gel in a predetermined pattern of morphological interrelation in order to allow the composite to react to an electrical or chemical stimulus, and thereby having the change in redoxpotential of the conjugated polymer cause 50 % of the total volume change of the composite in at most 5 minutes from the onset of the stimulus to the conjugated polymer.

Furthermore the present invention relates to a method of producing an actuator comprising the steps of:

-    selecting a composite as defined above

-    applying an electrode to the composite in such a manner that the conjugated polymer is able to change redox-potential, thereby obtaining an actuator, wherein the conjugated polymer cause a 50 % of the total volume change of the composite in at most 5 minutes from the onset of a stimulus to the conjugated polymer.

**Drawings**

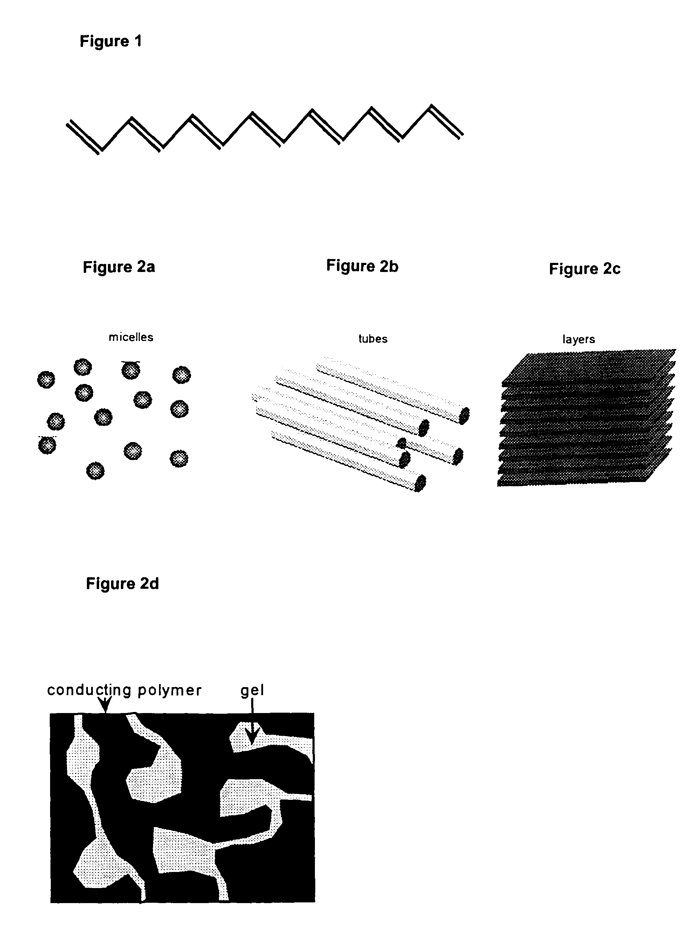

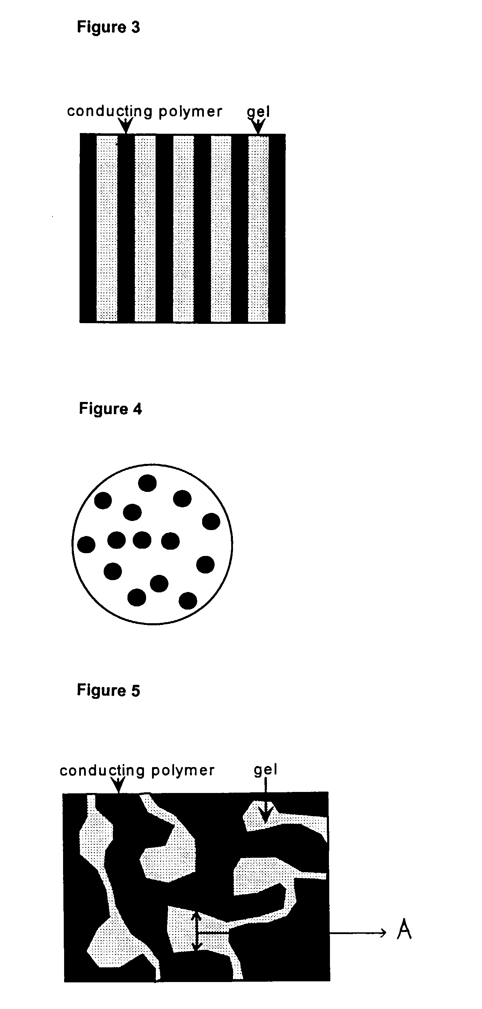

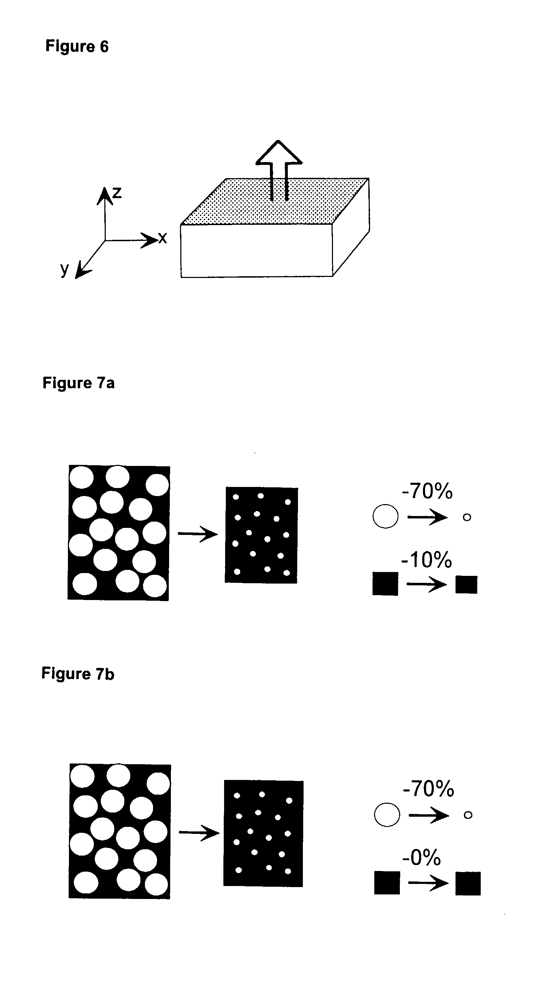

The following is a description of the drawings mentioned in the text.
Figure 1
A conjugated polymer characterised by alternating single and double bonds along its backbone.
Figure 2
Illustrates different emulsions. The morphology of these composites may be varied and include micelles (Fig. 2a), tubes (Fig. 2b), layers (Fig. 2c) and a less ordered structure (Fig. 2d).
Figure 3
This figure shows a multi-layered composite structure with alternating polymer and gel layers.
Figure 4
Shows a cross-section of a composite structure in the form of fibres or fibre bundles (black dots) of the gel component in a matrix of the polymer.
Figure 5
This figure illustrates the distance A, defined as the distance between two opposing surfaces of either the gel or the polymer.
Figure 6
This figure is an illustration of the force density. The composite expands in the z-direction, and the force is delivered in the z-direction. The force is divided by the area perpendicular to the z-direction (shown in grey).
Figure 7
Figure 7a and 7b show the expanded state and contracted state of two different composites, Fig. 7a with a volume changeable polymer and Fig. 7b, wherein the polymer does not contract. In both, the gel is depicted as white parts in the black matrix of polymer.

**Detailed description of the invention**

The object of the present invention is to provide a novel composite comprising a conjugated polymer and an ion-sensitive gel capable of rapidly changing its volume.
The conjugated polymer (= conducting polymer) of the composite according to the invention is an organic macromolecule characterised by alternating single and double bonds along its backbone. The conjugated polymers may undergo oxidation-reduction, or redox, reactions in which electrons are donated (reduction) or removed (oxidation) from the polymer. Ion transport may accompany this electron transport in order to maintain charge neutrality if the polymer is in contact with an electrolyte.

In a preferred embodiment the conjugated polymer comprises monomer units selected independently from the group of pyrrole, aniline, thiophene, acethylene, phenylene, p-phenylene vinylene, p-phenylene sulphide, thienylenevinylene, furane, azulene, and isothianaphthene or a derivative thereof.

The gel of the composite according to the invention is a three-dimensional network of cross-linked macromolecular polyelectrolytes, in which the gel can be swollen by solvents. Thus, the gel can hold a large fraction of solvent, typically water. By an ion-sensitive gel is meant a volume responsive gel sensitive to ionic strength, which in turn means that the gel changes volume in response to a change, in the gel phase, of pH or ionic strength. By ionic strength is meant changes in salt or ion concentrations, and in the present context pH changes are included. A pH-responsive gel according to the invention changes volume due to a change in the charging of the polymer chain, which is a chemical reaction where acidic or basic groups on the polymer are ionised or neutralised.

An ionic strength responsive gel, changes volume due to changes in the screening, caused by changes in the ion-concentration of the coulomb forces between changed groups on the polymer chain.

In one aspect of the present invention, the gel is a pH-sensitive gel. An example of a gel sensitive to pH is a polyacid that reversibly contracts and expands upon exposure to acid and base (alkali). Exposure to base produces an electrostatic repulsion of ions on the polymer chain and causes an expansion of the coiled structure that exists in an acid environment. The expansion is accompanied by an uptake of water.

Furthermore, polyacrylonitrile (PAN) can be treated to produce pH-sensitivity measured to be up to 800%. The expansion and contraction is explained as two states corresponding to two different dielectric constants of the solution in the gel. This gel is also sensitive to osmotic pressure or ion concentration.

An example of a gel sensitive to salt concentration is cross-linked collagen, which undergoes chemical melting and crystallisation. This system is thus based on a phase transition or order-disorder transition.

In another preferred embodiment of the present invention the gel comprises a monomer or repeating monomer units independently selected from the group of acrylic acid, vinyl phosphate, acrylamide, styrene, urethane, ethylene oxide, propylene oxide, vinyl alcohol, acrylonitrile, and collagen or a derivative thereof.

It is the purpose of the present invention to provide a composite having superior physical and chemical properties in particular with respect to control of volume change and amount of volume change. This is achieved by taking advantage of the conjugated polymers capability of changing redox-potential upon the onset of an electrical or chemical stimulus. Thus, the oxidation-state of the conjugated polymer can be electrochemically controlled. The volume change of the gel is in response to the change of the redox-potential of the conjugated polymer. Thereby, the volume change is electrochemically controllable.

In the composite according to the invention the volume change of the gel may be an expansion of at least 10 % of the starting volume or the most contracted volume. In the present context the volume change is defined as an expansion. However, since the composite reacts by expanding and contracting depending on the redox-potential of the polymer, a change of volume may also be a contraction.

In a preferred embodiment the volume change may be at least a 20% expansion, more preferred a 50% expansion. Since the gel itself may be capable of volume changes of up to 800%, even greater volume changes of the composite are envisaged.

When a conjugated polymer and an ion-sensitive gel are combined, the conjugated polymer is used to initiate a volume change in the gel, and the gel may act as a source/sink of ions for the conjugated polymer. When current is applied to a conjugated polymer the ion concentration at the surface of the polymer changes upon electrochemical cycling as illustrated by equation 1-3 below. Likewise the pH at the surface of the conducting polymers, e.g. polypyrrole and polyaniline changes upon electrochemical cycling, falling during oxidation. The number of ions taken up and released by these polymers is very high.

The redox reactions referred to above, may also be referred to as doping and de-doping. Accordingly, doping refers to the oxidised state where electrons are removed from the polymer. This may be exemplified by the equation:

$$(1) \qquad P^+(A^-) + C^+(aq) + e^- \leftarrow \rightarrow P^\circ + A^-(aq) + C^+(aq)$$

where $P^+$ represents the *doped* (oxidised) state of the polymer and $P^\circ$ the *undoped* (reduced, neutral) state. $P^\circ(A-)$ indicates that the anion A- is incorporated in the polymer as a dopant, (aq) represents an anion in the aqueous or solvent phase, and e- represents an electron. If the anion is immobile, then the following situation can occur:

$$(2) \qquad P^+(A^-) + C^+(aq) + e^- \leftarrow \rightarrow P^\circ + A^-(A^-C^-)$$

In this case, cations enter the polymer in the neutral state for charge compensation. In both cases, there may be solvent transport in or out of the polymer associated with the ion movements. A mixed situation in which both equations 1 and 2 are applicable may also occur.

In the conjugated polymer, the anion may be immobile i.e. it is not able to move in and out of the polymer.

The conjugated polymer of the composite of the present invention preferably comprises an immobile anion selected from alkyl sulphates, alkyl sulphonates, dodecylbenzenesulphonate, polystyrenesulphonate, polyacrylic acid, Nafion, polyacrylomidopropylsulfonic acid.

Some polymers are self-doped, i.e. the anion is a substituent on the polymer, and is thus immobile. An example of a self-doped polymer is a polyaniline, exemplified by equation (3):

$$(3) \qquad P^+ + C^+(aq) + e^- \leftarrow \rightarrow P^\circ (C^+)$$

In another aspect of the invention, the conjugated polymer of the composite comprises a mobile anion selected from tosylate, triflate, $ClO_4^-$, $BF_4^-$, $PF_6^-$ and $NO_3^-$.

In yet another aspect of the invention, the conjugated polymer of the composite comprises an immobile cation. In this respect, the cation is preferably a mono-charged cation selected from tetra-alkyl ammonium salt, tri-alkyl ammonium salt, alkyl amines, polyimines and phosphonium salts.

Thus, the present invention relates to a composite comprising one conjugated polymer capable of changing redox-potential upon the onset of an electrical or chemical stimulus, and an ion-sensitive gel capable of changing volume, the polymer and the gel being morphologically interrelated and wherein the volume change of the gel is in response to the change of the redox-potential of the conjugated polymer.

According to the invention, 50 % of the total volume change of the composite is achieved within a period of 5 minutes from the onset of the electrical stimulus to the conjugated polymer, preferably at least 50% of the volume change is achieved within a period of less than 10 seconds, more preferably less than 1 second, even more preferably less than 0.1 second. The speed of the response is defined by the time it takes the composite to change volume by an amount $(V_{max} - V_{min})/2$, where $V_{min}$ is the fully contracted volume and $V_{max}$ is the fully expanded volume.

In a more preferred embodiment, 75%, or even 100% of the total volume change has taken place within the periods defined above. Accordingly, preferably the total volume change has occured within a period of 1 second.

The volume change of the composite relies almost entirely on the volume change of the gel. However, the volume of the conjugating polymer may also change in response to a change in oxidation level. The volume change in conducting polymers is typically small, less than 10%.

In the composite according to the invention, the polymer and the gel are preferably selected such that the volume change of the polymer (if any) and of the gel are in the same direction in response to a change in oxidation level. Thus, preferably both components either expand or contract upon an electrical or chemical stimulus.

This can be accomplished in a number of ways, two of which are described below.

Combinations

• Immobile anion or self-doped polymer

In this case, equation (2) or (3) mentioned above applies. During oxidation, the conjugated polymer contracts, expelling cations into and lowering the pH of the gel. A pH-sensitive gel with ionizable acid groups responds by also contracting, and/or the gel responds to the increased cation concentration by contracting. The gel "gets out of the way" of the conjugated polymer, as illustrated in Fig. 7a, allowing the composite to change volume by $\Delta V_{ep}*F_{ep}+\Delta V_{gel}*F_{gel}$, where $\Delta V_{ep}$ is the volume change of the conjugated polymer, $\Delta V_{gel}$ the volume change of the gel, and F the volume fraction of each component. During reduction, the process is reversed

• Mobile anion

In this case, equation (1) above applies. During oxidation, the conjugated polymer expands, taking up anions and lowering the pH of the gel. The pH-sensitive gel, for example with ionizable base groups, responds by also expanding, and/or the gel responds to the lowered anion concentration by expanding. The volume change in the conjugated polymer magnifies the volume change in the gel. In the figure above, the arrows are reversed during oxidation.

Another preferred combination is a conjugated polymer that does not change volume and a gel that changes volume in response to the external signal. An example of this type: a PPy layer that does not change volume significantly, but a polyacryl acid gel that responds to the ion fluxes induced by the polypyrrole, contracting during oxidation and expanding during reduction, vide Fig. 7b.

As stated above, the oxidation state of the conjugated polymer can be electrochemically controlled, whereby the response of the whole composite depends on the voltage applied.

Generally, the predetermined volume change is obtained by applying from -3V to +3V to the polymer, such as from -1.5V to +1.5V, or even -1.0V to 0V.

On polypyrrole, the pH at the surface changes from 10.5 at -0.6V (vs. Ag/AgCl) to 3.5 at +0.6V. The voltage may be applied by any suitable means such as an electrode, which is an integral part of the composite.

In another aspect of the present invention the stimulus to the composite is chemical. The chemicals are preferably iodine or ammonia.

The term morphological interrelated defines the physical relationship between the two components in the composite, namely the conjugated polymer and the gel. In the present invention the conjugated polymer is in intimate contact throughout its volume with the gel. This intimate contact is a feature providing for the rapid volume change of the composite.

The structure of the composite according to the invention may have any suitable structure, for example an interpenetrating network, or an emulsion, or the structure may be layered.

An interpenetrating network is a blend of two materials on the molecular level. Each material forms a connected structure throughout the composite.

In emulsions the composite components do not blend on a molecular level but blend in small regions of each type of component (see Figure 2a-2d).

The composite may be a layered structure, such as a multi-layered structure, in which the conjugated polymer and gel are placed in separate phases. The layers may be relatively thick, for example several micrometers. The layers may be joined in a variety of ways, such as gluing or melting them together, polymerising one material over the other, dipping one into the other and co-extrusion. The multi-layers may be made from a large sheet consisting of one layer of each material that is folded or rolled. Furthermore, the composite may have the geometry of fibres or fibre bundles of one component in a matrix of the other component (see Figure 4).

The conducting polymer regions must preferably be connected throughout the composite, which means that a current is able to pass through the whole conducting material.

The dimensions of the polymer and the gel are of great importance to the speed with which the composite of the present invention changes its volume. If each layer or region of either polymer or gel, in particular gel is too small, the composite will be unable to change volume, possibly due to an insignificant capability of swelling by solvent uptake

Accordingly, the dimensions of each layer or region of either polymer or gel is preferably more than 50 Ångstrøm, more preferred more than 250 Å, and even more preferred more than 500 Å.

Furthermore, in order to reduce the distance of ion transport it has been found that each layer or region is preferably not more than 1 mm in at least one plane. This may be defined in the following statement: in any point throughout the gel or the polymer, distance A (defined below) is less than 1 mm in at least one plane through said point. In the present context, the distance A is defined as the distance between two opposing surfaces of either the gel or the polymer (Figure 5).

Flexibility of the composite is another important feature. In order to accommodate the large volume changes without mechanical failure, the composite must be flexible. This is ensured by the component of the composite being flexible at all stages of contraction and expansion.

Furthermore, the flexibility of the composite is due to the polymer material. In particular where the electrode used to apply stimulus is polymeric rather than metallic, the flexibility is increased.

The strength of the composite (i.e. the strength to push against a load) is predominantly determined by the swelling properties of the gel. The term strength may be defined as the measurement of force density. The force density is defined as the force divided by the area of the composite orthogonal to the measured force. The force density is measured in the direction in which the expansion or contraction of the composite is utilised (see Figure 6).

The force generated by the composite may be measured using a balance, load cell another force transducer, or weights. In case of the latter, weights may be attached to or placed onto the composite material and the maximum force may be calculated from the equation F (force) = ma, where m is the mass and a = g = 9.8 m/s$^2$.

Another way to calculate the force is by multiplying the expansion of the composite by the Young's modulus. The expansion in each direction may be measured using a ruler, profilometer, or other means. The Young's modulus may be measured using a rheometer or a similar device. It is important to stress that the measurement of the Young's modulus must be carried out in the same physical environment as the one in which the composite operates. This is due to the fact that the Young's modulus is affected by whether a polymer or a gel is either wet or dry. According to the present invention the Young's modulus is measured in a liquid environment.

In a preferred embodiment of the present invention the Young's modulus is at least 500 MPa (mega pascal), preferably at least 1000 MPa, more preferably at least 2000 MPa, and even more preferably at least 3000 MPa.

The mechanical failure by overloading, ripping or cracking may be defined by the ultimate elongation and failure stress.

The ultimate elongation is a measure of how much the composite may be passively elongated without breaking. The ultimate elongation is preferably up to 35 % of the original length, such as up to 25 %.

Failure stress is a measure of the force necessary to pull the composite apart. The failure strength is preferably as high as possible, such as at least 2 MPa, preferably above 3 MPa, such as 4-12 MPa.

In the composite both of these properties are predominantly determined by the properties of the conjugated polymer.

The composite may be used for any purpose where its capability of controllable volume change and other characteristics are useful, such as an actuator. Accordingly, in another aspect of the present invention the composite is used for the production of an actuator.

In yet another aspect of the present invention an actuator or a sensor may comprise a composite as defined above.

Further in the present invention the actuator may be an artificial muscle or an hydraulic actuator or a bilayer actuator or a micro actuator. The industrial applications of the actuators comprising a composite according to the present invention are vast. Some of the applications may be as dextrous robotic grippers, smart valves, advanced consumer products and toys. Other potential applications are within the medico technical field, such as stearable catheters and other minimal invasion surgical instruments.

Yet another aspect of the present invention relates to the process of causing a volume change in a composite as described above comprising the steps of applying an electrical or chemical stimulus to the conjugated polymer, causing a change of the redox-potential of the polymer, and arranging the ion-sensitive gel in contact with the conjugated polymer in a predetermined pattern of morphological interrelation in order to allow the gel to respond to the change in redox-potential of the polymer by a change in volume.

A further aspect of the present invention concerns a method of producing a composite as defined above comprising the steps of selecting a conjugated polymer and an ion-sensitive gel, then combining the conjugated polymer and the ion-sensitive gel in a predetermined pattern of morphological interrelation in order to allow the composite to react followed by applying an electrical or chemical stimulus to the conjugated polymer and having the change in redox-potential of the conjugated polymer cause a 50 % of the total volume change of the composite in at most 5 minutes from the onset of the stimulus to the conjugated polymer.

**Claims**

1. A composite comprising,

   one conjugated polymer capable of changing redox-potential upon the onset of an electrical or chemical stimulus, and

   an ion-sensitive gel capable of changing volume,

   the polymer and the gel being morphologically interrelated, and

   wherein the volume change of the gel is in response to the change of the redox-potential of the conjugated polymer, and

   50 % of the total volume change of the composite is achieved within a period of at most 5 minutes from the onset of the stimulus to the conjugated polymer.

2. The composite according to claim 1, wherein the conjugated polymer comprises monomer units selected independently from the group of pyrrole, aniline, thiophene, acethylene, p-phenylene, p-phenylene vinylene, p-phenylene sulfide, thienylenevinylene, furane, azulene, and isothianaphthene or a derivative thereof.

3. The composite according to claim 1 or 2, wherein the composite comprises an immobile anion.

4. The composite according to claim 3, wherein the immobile anion is selected from alkyl sulphates, alkyl sulphonates, dodecylbenzenesulphonate, polystyrenesulphonate, polyacrylic acid, Nafion, and polyacrylomidopropylsulphonic acid.

**5.** The composite according to claim 1 or 2, wherein the composite comprises a mobile anion.

**6.** The composite according to claim 5, wherein the mobile anion is selected from tosylate, triflate, $ClO_4^-$, $BF_4^-$, $PF_6^-$ and $NO_3^-$.

**7.** The composite according to claim 1,2, 5 or 6, wherein the composite comprises an immobile cation.

**8.** The composite according to claim 7, wherein the immobile cation is selected from tetra-alkyl ammonium salt, tri-alkyl ammonium salt, alkyl amines, polyimines and phosphonium salts.

**9.** The composite according to any of the preceding claims, wherein the gel comprises a monomer or repeating monomer units independently selected from the group of acrylic acid, vinyl phosphate, acrylamide, styrene, urethane, ethylene oxide, propylene oxide, vinyl alcohol, acrylonitrile, and collagen or a derivative thereof.

**10.** The composite according to any of the preceding claims, wherein the gel is a pH-sensitive gel.

**11.** The composite according to any of the preceding claims, wherein the volume change of the gel is an expansion of at least 10 % of the starting volume.

**12.** The composite according to any of the preceding claims, wherein the stimulus is an electrical stimulus.

**13.** The composite according to claim 12, wherein the stimulus is applied by an electrode being an integral part of the composite.

**14.** The composite according to any of the preceding claims, having the structure of an interpenetrating network.

**15.** The composite according to any of the claims 1-14, having the structure of an emulsion.

**16.** The composite according to any of the claims 1-14, wherein the structure is layered.

**17.** The composite according to any of the preceding claims, wherein an internal distance A is less than or equal to 1 mm.

**18.** The composite according to any of the preceding claims, wherein 50 % of the total volume change of the composite is achieved within a period of less than 10 sec.

**19.** The composite according to any of the preceding claims, wherein the Young's modulus of the composite is at least 500 MPa.

**20.** The use of a composite according to claims 1-19, for the production of an actuator.

**21.** An actuator comprising a composite as defined in any of the claims 1-19.

**22.** A sensor comprising a composite as defined in any of the claims 1-19.

**23.** The actuator according to claim 21, which is an artificial muscle or an hydraulic actuator or a bilayer actuator or a micro actuator.

**24.** A process of causing a volume change in a composite comprising a conjugated polymer capable of changing redox-potential and an ion-sensitive gel capable of changing volume comprising the steps of:

- applying an electrical or chemical stimulus to the conjugated polymer, causing a change of the redox-potential of the polymer,

- arranging the ion-sensitive gel in contact with the conjugated polymer in a predetermined pattern of morphological interrelationship in order to allow the gel to respond to the change in redox-potential of the polymer by a change in volume.

**25.** A method of producing a composite comprising the steps of:

- selecting a conjugated polymer and an ion-sensitive gel

- combining the conjugated polymer and the ion-sensitive gel in a predetermined pattern of morphological interrelation in order to allow the composite to react to an electrical or chemical stimulus, and thereby having the change in redoxpotential of the conjugated polymer cause 50 % of the total volume change of the composite in at most 5 minutes from the onset of the stimulus to the conjugated polymer.

**26.** A method of producing an actuator comprising the steps of:

- selecting a composite as defined above

- applying an electrode to the composite in such a manner that the conjugated polymer is able to change redoxpotential, thereby obtaining an actuator, wherein the conjugated polymer cause a 50 % of the total volume change of the composite in at most 5 minutes from the onset of a stimulus to the conjugated polymer.

**Figure 1**

**Figure 2a**

micelles

**Figure 2b**

tubes

**Figure 2c**

layers

**Figure 2d**

conducting polymer      gel

**Figure 3**

conducting polymer     gel

**Figure 4**

**Figure 5**

conducting polymer     gel

A

**Figure 6**

**Figure 7a**

**Figure 7b**

EP 1 026 192 A1

| | European Patent Office | EUROPEAN SEARCH REPORT | Application Number EP 99 20 0250 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION |
|---|---|---|---|
| A | WO 96 34417 A (SMELA ELISABETH ;IGANAES OLLE (SE); LUNDSTROEM INGEMAR (SE)) 31 October 1996 (1996-10-31) * claims 1,14,18,19 * | 1 | C08J3/24 C08L101/14 F03G7/06 |
| A | EP 0 310 326 A (DOW CORNING ;BIOMATERIALS UNIVERSE INC (JP)) 5 April 1989 (1989-04-05) * page 4, line 49 - line 55 * * claim 1 * | 1 | |
| A | DATABASE WPI Section Ch, Week 8926 Derwent Publications Ltd., London, GB; Class A91, AN 89-189548 XP002111775 & JP 01 129064 A (KOMATSU KK), 22 May 1989 (1989-05-22) * abstract * | 1 | |
| A | DATABASE WPI Section Ch, Week 8940 Derwent Publications Ltd., London, GB; Class A85, AN 89-288651 XP002111776 & JP 01 210605 A (SANYO CHEM IND LTD), 24 August 1989 (1989-08-24) * abstract * | 1 | TECHNICAL FIELDS SEARCHED C08J F03G C08L |

The present search report has been drawn up for all claims

| Place of search | Date of completion of the search | Examiner |
|---|---|---|
| THE HAGUE | 10 August 1999 | Niaounakis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

13

**EP 1 026 192 A1**

**ANNEX TO THE EUROPEAN SEARCH REPORT
ON EUROPEAN PATENT APPLICATION NO.**

EP 99 20 0250

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-1999

| Patent document cited in search report | | | Publication date | Patent family member(s) | | | Publication date |
|---|---|---|---|---|---|---|---|
| WO 9634417 | A | | 31-10-1996 | AU | 5520996 | A | 18-11-1996 |
| EP 0310326 | A | | 05-04-1989 | JP | 1096239 | A | 14-04-1989 |
| | | | | CA | 1300792 | A | 12-05-1992 |
| | | | | DE | 3884122 | D | 21-10-1993 |
| | | | | DE | 3884122 | T | 21-04-1994 |
| | | | | US | 5171775 | A | 15-12-1992 |
| JP 1129064 | A | | 22-05-1989 | NONE | | | |
| JP 1210605 | A | | 24-08-1989 | JP | 2611795 | B | 21-05-1997 |